# EUROPÄISCHE PATENTANMELDUNG

(11) **EP 2 270 516 A2**
(43) Veröffentlichungstag der Anmeldung: **05.01.2011**
(21) Anmeldenummer: 10011612.8
(22) Anmeldetag: 12.07.1997
(51) Int. Cl.: G01N 35/10, G01N 21/86, G01N 33/543

(54) **Analysesystem mit Mitteln zur Erkennung von Unterdosierungen**

(30) Priorität: 16.07.1996 DE 19628562
(62) Teilanmeldung aus: 97111903.7
(71) Anmelder: Roche Diagnostics GmbH, 68305 Mannheim (DE)
(72) Erfinder: Bolduan, Franz, 68165 Mannheim (DE)

(57) **Zusammenfassung**

Analysesystem zur Auswertung von Testelementen mit Mitteln zur Feststellung, ob auf die Aufgabezone eines Testelementes eine ausreichende Menge Probeflüssigkeit gleichmäßig aufgegeben wurde, wobei mindestens eine Lichtquelle zur Beleuchtung der Probenaufgabezone oder Auswertezone eines Testelementes verwendet wird und von verschiedenen Bereichen der Probenaufgabezone oder Auswertezone reflektiertes oder transmittiertes Licht mit mindestens zwei Sensoren detektiert wird, die Ausgangssignale der Sensoren mit einer Auswerteeinheit in Meßwerte umgewandelt werden und festgestellt wird, ob die Abweichung der Meßwerte ausreichend klein ist.

## Beschreibung

Die Erfindung betrifft Analysesysteme zur Auswertung von analytischen Testelementen mit Mitteln zur Feststellung, ob eine ausreichende Menge an Probeflüssigkeit gleichmäßig auf das Testelement aufgegeben wurde. Für diesen Zweck beinhaltet ein Analysesystem gemäß einer ersten nicht erfindungsgemäßen Ausführungsform eine Steuereinrichtung, mit der mindestens zwei Lichtquellen getrennt voneinander aktiviert werden können und die Lichtquellen voneinander getrennte oder zumindest nicht vollständig überlappende Bereiche der Aufgabezone oder Auswertezone des Testelementes beleuchten. Von der Auswertezone des Testelementes reflektiertes oder durch die Auswertezone transmittiertes Licht wird von mindestens einem Sensor detektiert, der Ausgangssignale entsprechend der Lichtintensität liefert. Eine Auswerteeinheit nimmt ein erstes Ausgangssignal auf, während die erste der mindestens zwei Lichtquellen aktiviert ist und ein zweites Ausgangssignal während die zweite der mindestens zwei Lichtquellen aktiviert ist. Die Ausgangssignale werden von der Auswerteeinheit in Meßwerte umgewandelt und diese Meßwerte miteinander verglichen. Falls die Abweichung der Meßwerte voneinander ausreichend gering ist, wurde eine ausreichende Menge an Probeflüssigkeit auf das Testelement aufgegeben. Überschreitet die Abweichung einen vorgegebenen Grenzwert, so war die Probenmenge entweder zu gering und/oder wurde unsachgemäß aufgegeben und das Analysesystem gibt eine entsprechende Fehlermeldung aus.

Im Stand der Technik ist bereits seit geraumer Zeit das Problem bekannt, daß analytische Testelemente fehlerhafte Resultate liefern, wenn entweder zu wenig Probeflüssigkeit auf ein Testelement aufgegeben wird oder die Probeflüssigkeit fehlerhaft, d. h. nicht vollständig am vorbestimmten Ort aufgegeben wird. In der Vergangenheit mußte der Benutzer selbst visuell kontrollieren, ob die Probeflüssigkeit am richtigen Ort und in ausreichender Menge aufgegeben wurde. Eine visuelle Kontrolle durch den Benutzer ist jedoch wenig zuverlässig, insbesondere bei Testelementen zur Feststellung des Blutzuckerspiegels, die von Diabetikern benutzt werden, deren Sehvermögen häufig durch die Krankheit beeinträchtigt ist. Zur Lösung des Problems wird in der europäischen Patentschrift EP-B-0 087 466 eine Apparatur beschrieben, die aufgrund der Absorption von Wasser im Infrarotbereich eine Abschätzung vornimmt, ob die Probenmenge ausreichend ist. Die vorgeschlagene Apparatur ist jedoch für ein tragbares Analysesystem, wie z. B. ein Blutzuckermeßgerät, nachteilig, da zusätzlich zu den Mitteln für eine quantitative Auswertung ein Infrarotsender und Empfänger notwendig sind. Weiterhin wird mit der in EP-B-0 087 466 beschriebenen Apparatur eine integrale Untersuchung vorgenommen, ob genügend Probeflüssigkeit aufgegeben wurde. Für die Durchführung analytischer Tests mit Testelementen ist jedoch nicht nur die Gesamtmenge an Probeflüssigkeit von Belang, sondern auch die Verteilung der Probeflüssigkeit über die Probenaufgabezone. Mit dieser Apparatur sind daher solche Fälle nicht sicher zu erkennen, bei denen zwar ausreichend Probeflüssigkeit aufgegeben wurde, diese jedoch so ungünstig plaziert ist, daß der Reagenzbereich des Testelementes ungleichmäßig oder unvollständig mit Probeflüssigkeit durchfeuchtet wird.

Die Aufgabe der vorliegenden Erfindung bestand darin, ein Analysesystem vorzuschlagen, das Mittel beinhaltet, mit denen eine unzureichende Probenmenge oder eine ungeeignete Aufgabe der Probe auf das Testelement sicher erkannt werden kann. Eine weitere Aufgabe der vorliegenden Erfindung war es, Mittel zur Feststellung unzureichender Probemengen vorzuschlagen, die einfach und kostengünstig in kompakte Analysesysteme integriert werden können bzw. die bereits in Analysesystemen vorhanden sind.

Die vorstehend genannte Aufgabe wird durch ein nicht erfindungsgemäßes Analysesystem gemäß EP 0 819 943 A2 zur Auswertung von Testelementen gelöst, das mindestens zwei Lichtquellen, die voneinander getrennte oder zumindest nicht vollständig überlappende Bereiche der Aufgabezone oder Auswertezone des Testelementes beleuchten sowie eine Steuereinrichtung, mit der die mindestens zwei Lichtquellen getrennt voneinander aktiviert werden können, mindestens einem Sensor, der von der Auswertezone reflektiertes oder durch die Auswertezone transmittiertes Licht detektiert und Ausgangssignale entsprechend der Lichtintensität liefert sowie eine Auswerteeinheit, die ein erstes Signal des Sensors aufnimmt und in einen ersten Meßwert umwandelt, wenn die erste der mindestens zwei Lichtquellen aktiviert ist, die ein zweites Ausgangssignal des Sensors aufnimmt und in einen zweiten Meßwert umwandelt, wenn die zweite der mindestens zwei Lichtquellen aktiviert ist, die die Meßwerte vergleicht und feststellt, ob die Abweichung von erstem und zweitem Meßwert ausreichend klein ist.

Erfindungsgemäß wird ein Analysesystem zur Auswertung von Testelementen vorgeschlagen, das mindestens zwei Sensoren beinhaltet, die von jeweils einem Bereich der Aufgabezone oder Auswertezone reflektiertes oder transmittiertes Licht detektieren und Ausgangssignale entsprechend der Lichtintensität liefern, wobei die Bereiche voneinander getrennt sind oder zumindest nicht vollständig überlappen sowie mindestens einer Lichtquelle, die die Probenaufgabezone oder Auswertezone beleuchtet, eine Auswerteeinheit, die ein Ausgangssignal des ersten Sensors aufnimmt und in einen ersten Meßwert umwandelt, ein Ausgangssignal des zweiten Sensors aufnimmt und in einen zweiten Meßwert umwandelt, den ersten und zweiten Meßwert vergleicht und feststellt, ob die Abweichung der Meßwerte ausreichend klein ist.

Analysesysteme zur Auswertung von Testelementen werden einerseits im Bereich der klinischen Diagnostik eingesetzt, wo es darauf ankommt, hohe Probendurchsätze zu erreichen. Andererseits werden solche Analysesysteme jedoch im Bereich des sogenannten Home-Monitoring eingesetzt, bei dem der Patient mit Hilfe geeigneter Testelemente und eines kompakten Analysesystemes in die Lage versetzt wird, Routinemessungen, wie z. B. den Blutzuckerspiegel oder das Koagulationsverhalten des Blutes, selbst zu überprüfen. Insbesondere im Bereich des Glukosemonitoring haben sich Analysesysteme zur Auswertung von Testelementen stark durchgesetzt. Der Grund hierfür liegt darin, daß bei Diabetikern zu hohe aber auch zu niedrige Blutzuckerspiegel zu irreversiblen physiologischen Schädigungen führen. Insbesondere für diese Geräte, die von der breiten Bevölkerung bedient werden aber auch für automatisch klinische Analysensysteme ist es von Bedeutung, daß eine ausreichende Menge Probeflüssigkeit, in der Regel Blut aber auch Urin, Speichel und dergleichen, auf eine dafür vorgesehene Zone des Testelementes in geeigneter Weise aufgegeben wird. Diese Forderung, eine bestimmte Probenmenge nicht zu unterschreiten und auch die Probe geeignet zu positionieren, wird deutlicher wenn man sich die Funktionsweise von Testelementen und ihre automatische Auswertung vergegenwärtigt.

Testelemente für analytische Auswertungen sind in der Regel streifenförmig ausgebildet. Auf einem Halter, der zur Handhabung dient, ist eine Reagenzschicht aufgebracht, die mit der Probe reagiert und hierbei eine detektierbare Änderung durchläuft. Bei einer Vielzahl von Analysemethoden ist diese detektierbare Veränderung ein Farbumschlag im sichtbaren Bereich des Spektrums. Ein derartiges Analyseverfahren mit einem Testelement ist beispielsweise in der EP-A-0 354 441 beschrieben. Zur Messung der Gerinnungsfaktoren des Blutes wird jedoch z. B. auch die Wechselwirkung des Testelementes mit einem Magnetfeld untersucht. Weiterhin sind auch Testelemente bekannt, deren Fluroeszenzeigenschaft sich in Abhängigkeit von der Analytkonzentration in der Probe ändert. Die vorliegende Erfindung ist nicht auf die Anwendung eines spezifischen Analyseprinzips beschränkt, wenngleich auch ihre Anwendung in Reflektionsphotometern besonders günstig ist.

Analytische Testelemente besitzen gegenüber klinischen Analysen in flüssiger Phase den Vorteil, daß keine exakte Dosierung der Probeflüssigkeit vorgenommen werden muß, sondern lediglich bestimmte Mengenbereiche einzuhalten sind. Diese günstige Eigenschaft von Testelementen erklärt sich aus ihrem Aufbau. Die Probe wird auf eine saugfähige Schicht aufgegeben, die ein begrenztes Volumen Probeflüssigkeit aufnimmt und an die Reaktionszone weitergibt. Die Reaktionszone kommt mit einer genau vorbestimmten Menge an Probeflüssigkeit in Kontakt, so daß eine quantitative Auswertung möglich ist. Wird eine zu große Probenmenge auf das Testelement aufgegeben, so wird diese aufgrund der begrenzten Saugeigenschaften der Reaktionszone nicht von dieser aufgenommen und kann keine Verfälschung des Analyseergebnisses bewirken. Dieses vorteilhafte Verhalten von analytischen Testelementen ist beispielsweise in EP-A-0 345 781 beschrieben.

Wird hingegen auf ein Testelement eine zu geringe Probenmenge aufgegeben, so führt dies zu einer starken Verfälschung des Analyseergebnisses, da bei der Auswertung stets davon ausgegangen wird, daß die Reaktionszone ausreichend mit einer bestimmten Menge Probeflüssigkeit durchfeuchtet ist. Ein vergleichbares Problem tritt auf, wenn zwar genügend Probeflüssigkeit auf das Testelement gegeben wird, dies jedoch nicht an geeigneter Stelle erfolgt. Wird beispielsweise ein Blutstropfen so aufgegeben, daß nur ein Teilbereich der Reagenzschicht mit der Probe in Berührung kommt, so findet in den übrigen Bereichen der Reagenzschicht keine Reaktion statt. Auch eine derartige Probenaufgabe führt daher zu verfälschten Analysenergebnissen.

Erfindungsgemäß wird geprüft, ob der Bereich der Reaktionszone, welcher ausgewertet wird, mit Probeflüssigkeit versorgt ist. Dies erfolgt, indem Remissions- oder Transmissionswerte von mindestens zwei Teilbereichen der Aufgabezone oder aber Auswertezone miteinander verglichen werden.

Testelemente im Sinne der vorliegenden Erfindung besitzen eine Aufgabezone für Probeflüssigkeit sowie eine oder mehrere Auswertezonen. Bei den heute gängigen Teststreifen für Reflektionsmessungen wird die Probeflüssigkeit auf die Aufgabezone gegeben und gelangt von dort in die Reagenzschicht. Die Reagenzschicht ist ihrerseits in der Regel von der der Aufgabezone abgewandten Seite optisch zugänglich und dient zur Auswertung des Testelementes, wird daher als Auswertezone bezeichnet. Probenaufgabe und -auswertung erfolgen demgemäß von zwei gegenüberliegenden Seiten. Es sind weiterhin auch solche Testelemente für Remissionsmessungen erhältlich, bei denen Probenaufgabe und -auswertung von der gleichen Seite durchgeführt werden. In diesem Falle sind Aufgabezone und Auswertezone miteinander identisch.

Bei Testelementen für Transmissionsmessungen wird die Seite der Probenaufgabe wiederum als Aufgabezone bezeichnet. Aufgrund der erforderlichen Lichtdurchlässigkeit des Testelementes dient jedoch die Gesamtheit der Schichten des Testelementes als Auswertezone.

Zur Feststellung, ob auf die Aufgabezone eines Testelementes eine ausreichende Menge Probeflüssigkeit hinreichend gleichmäßig aufgegeben wurde, wird erfindungsgemäß ermittelt, ob voneinander verschiedene Bereiche der Aufgabezone oder Auswertezone ähnliche Transmissions- oder Remissionseigenschaften besitzen. Dieses Meßprinzip setzt voraus, daß die Probenaufgabe selbst und/oder ein Reaktionsprodukt der Probeflüssigkeit mit der Reagenzschicht zu einer Veränderung der Remissions- oder Transmissionseigenschaften führt. Wird beispielsweise eine gefärbte Flüssigkeit, wie Blut, auf einen Teststreifen aufgegeben, so kann bereits aufgrund dieser Färbung bestimmt werden, ob verschiedene Bereiche der Aufgabezone durch Probeflüssigkeit benetzt sind. Vorzugsweise wird für die erfindungsgemäße Bestimmung jedoch eine Remissions- oder Transmissionsänderung herangezogen, die aufgrund einer Reaktion der Probeflüssigkeit mit der Reagenzschicht des Testelementes erfolgt. Bei Testelementen für Remissionsmessungen wird die Untersuchung vorzugsweise von der der Probenaufgabe entgegensetzten Seite vorgenommen. Dies hat den Vorteil, daß nicht nur ein ungleichmäßiger Probenauftrag erkannt wird, sondern auch eventuelle Fehler des Testelementes, wie z. B. schwankende Durchlässigkeit für die Probenflüssigkeit oder schwankende Reagenzkonzentration in der Reagenzschicht, die zu einer ungleichmäßigen Verfärbung der Auswertezone führen.

Für die Feststellung, ob eine ausreichende Menge Probeflüssigkeit gleichmäßig auf die Aufgabezone gegeben wurde, kann im Rahmen einer ersten nicht erfindungsgemäßen Ausführungsform ein Analysesystem verwendet werden, das mindestens zwei Lichtquellen besitzt, die voneinander getrennte oder zumindest nicht vollständig überlappende Bereiche der Aufgabezone oder Auswertezone des Testelementes beleuchten. Mit mindestens einem Sensor wird von der Auswertezone reflektiertes oder durch die Auswertezone transmittiertes Licht detektiert. Durch die Betrachtung zweier Bereiche der Auswertezone kann ermittelt werden, ob von diesen beiden Bereichen ausreichend gleichartige Signale erhalten werden. Ist dies nicht der Fall, so hat in dem betrachteten Bereich keine gleichmäßige Reaktion von Probe und Reagenz stattgefunden, was darauf zurückgeht, daß entweder zuwenig Probeflüssigkeit verwendet wurde, die Probeflüssigkeit nicht gleichmäßig auf die Aufgabezone aufgetragen wurde oder das Testelement schadhaft ist. In jedem dieser Fälle kann das Testelement nicht sinnvoll ausgewertet werden, so daß der Bediener des Analysesystems auf diesen Umstand aufmerksam gemacht werden muß. Werden hingegen von den untersuchten Bereichen ausreichend gleiche Meßwerte erhalten, so kann, wenn die Bereiche geeignet gewählt wurden, davon ausgegangen werden, daß die durchgeführte Analyse verwendbar ist und in einem Nachfolgeschritt quantifiziert werden kann. Um einen Vergleich unterschiedlicher Bereiche der Auswertezone durchführen zu können, dürfen die untersuchten Bereiche nicht vollständig überlappen. Es ist jedoch möglich, daß sich die untersuchten Bereiche teilweise überschneiden. Reziprok zu der beschriebenen Vorgehensweise kann die Untersuchung voneinander verschiedener Bereiche der Auswertezone auch durch zwei Sensoren erfolgen, die Strahlung von unterschiedlichen Bereichen der Auswertezone erhalten.

Bei der ersten nicht erfindungsgemäßen Ausführungsform mit mindestens zwei Lichtquellen können selbstverständlich auch noch mehr Lichtquellen verwendet werden, um zusätzliche Bereiche der Auswertezone zu berücksichtigen. In der Praxis hat sich gezeigt, daß mit der erwähnten Ausführungsform jedoch schon bei Verwendung von nur zwei Lichtquellen eigentlich alle in der Praxis auftretenden Fälle nicht ausreichender oder ungleichmäßiger Probenaufgabe erkannt werden können. Analog gilt dies für die zweite (erfindungsgemäße) Ausführungsform der Erfindung mit mindestens zwei Sensoren.

Lichtquellen im Sinne der Erfindung sind sowohl solche mit einem im wesentlichen kontinuierlichen Emissionsspektrum, wie z. B. Glühlampen, als auch solche, die ein sogenanntes Bandenspektrum besitzen, wie z. B. Leuchtdioden. Leuchtdioden sind für eine Verwendung in einem tragbaren Analysesystem besonders gut geeignet, da sie einen relativ hohen Wirkungsgrad besitzen, was für batteriebetriebene Geräte von Bedeutung ist. Weiterhin sind Leuchtdioden für eine Reihe von Wellenlängenbereichen im sichtbaren sowie auch im Infrarotbereich erhältlich. Vorzugsweise wird in einem erfindungsgemäßen Analysesystem eine Lichtquelle eingesetzt, die den Hauptteil ihrer Strahlung in einem Wellenlängenbereich emittiert, der von der Auswertezone, nachdem sie mit Analyt reagiert hat, stark absorbiert wird. Beispielsweise wird für eine Testzone, die sich bei Reaktion mit dem Analyten rot verfärbt, eine grüne Leuchtdiode eingesetzt. Bei der ersten nicht erfindungsgemäßen Ausführungsform, die mit zwei (oder mehr) Lichtquellen arbeitet, ist es günstig, wenn die Lichtquellen eine möglichst ähnliche spektrale Intensitätsverteilung aufweisen. Andererseits ist es auch möglich, Lichtquellen unterschiedlicher Intensitätsverteilung einzusetzen, wenn eine entsprechende Kalibration der Auswerteeinheit vorgenommen wird.

Bei der ersten nicht erfindungsgemäßen Ausführungsform werden die Lichtquellen nacheinander aktiviert. Vorzugsweise liegt zwischen den Zeiten, zu denen die Lichtquellen aktiviert sind, eine Zeitspanne von weniger als 0,5 s. Hierdurch wird erreicht, daß Remissionsänderungen in dieser Zeitspanne, die durch Reaktion der Probe mit Reagenzien auftreten, keine inhomogene Befeuchtung der Auswertezone vortäuschen.

Von der Auswertezone des Testelementes reflektierte Strahlung wird bei der ersten nicht erfindungsgemäßen Ausführungsform durch mindestens einen Sensor und bei der zweiten erfindungsgemäßen Ausführungsform durch mindestens zwei Sensoren detektiert. Sensoren im Sinne der Erfindung sind im Stand der Technik gängige Halbleiterbauelemente, wie Photodioden, Phototransistoren oder photovoltaische Elemente. Günstig ist es im Falle der zweiten Ausführungsform mit mindestens zwei Sensoren, wenn die Sensoren eine ähnliche spektrale Empfindlichkeit aufweisen. Bei entsprechender Kalibration der Auswerteeinheit ist es jedoch auch möglich, Sensoren unterschiedlicher spektraler Empfindlichkeit einzusetzen.

Bei jeder der zwei Ausführungsformen werden die Ausgangssignale des Sensors bzw. der Sensoren durch eine Auswerteeinheit aufgenommen und in einen Meßwert umgewandelt. Diese Umwandlung kann eine Konversion analoger Sensorsignale in digitale Meßwerte beinhalten. Insbesondere ist es jedoch meist notwendig, die Ausgangssignale unter Berücksichtigung gerätespezifischer Größen in Meßwerte umzurechnen, die miteinander vergleichbar sind. In einem Idealfall, in dem bei der ersten nicht erfindungsgemäßen Ausführungsform die zwei Lichtquellen gleiche Intensität, identische spektrale Intensitätsverteilungen und auch gleiches Abstrahlverhalten besitzen, so daß die auf der Aufgabezone beleuchteten Bereiche gleich groß sind und mit gleicher Intensität ausgeleuchtet werden, kann auf eine Umrechnung gegebenenfalls verzichtet werden, wenn auch die Strahlengänge von der ersten Lichtquelle über die Aufgabezone zum Sensor und von der zweiten Lichtquelle über die Aufgabezone zum Sensor gleich sind. Da dieser Idealfall jedoch in der Praxis kaum anzutreffen ist, sollte mit dem jeweiligen Gerät zumindest werkseitig optional aber auch vor jeder Messung eine Kalibration durchgeführt werden. Für die erste nicht erfindungsgemäße Ausführungsform mit zwei Lichtquellen kann dies so erfolgen, daß nacheinander mit beiden Lichtquellen ein homogener Teststreifen beleuchtet und die gewonnenen Ausgangssignale des Sensors zueinander ins Verhältnis gesetzt werden. Der erhaltene Quotient berücksichtigt bereits unterschiedliche Intensitäten, Intensitätsverteilungen, Strahlungskegel der einzelnen Sensoren sowie gegebenenfalls unterschiedliche Lichtwege. Mit Hilfe des gewonnenen Quotienten können später an einem zu untersuchenden Testelement gewonnene Ausgangssignale in Meßwerte umgerechnet und miteinander verglichen werden. Im einfachsten Falle erfolgt dies, indem eines der erhaltenen Ausgangssignale mit dem Quotienten multipliziert wird. In der Praxis wird diese Umrechnung jedoch in der Regel etwas aufwendiger sein, da z. B. noch eine Dunkelstromkorrektur des Sensors vorgenommen wird, um Restlicht, das nicht von den Lichtquellen stammt sowie Verstärkerrauschen und andere elektronische Effekte, zu kompensieren.

Neben einer relativen Korrektur der beiden Lichtquellen gegeneinander kann auch eine absolute Kalibration vorgenommen werden. Hierzu werden mit den verwendeten Lichtquellen nacheinander ein Testelement bekannter Remission oder Transmission beleuchtet und Kalibrationsfaktoren ermittelt, die eine Umrechnung der Sensorsignale in absolute Remissions- oder Transmissionswerte ermöglichen. Da dieses Kalibrationsverfahren für jede der Lichtquellen durchgeführt wird, werden auch für jede der Lichtquellen geeignete Kalibrationsfaktoren erhalten. Vorteilhaft wird die Kalibration nicht nur an einem einzigen Testelement bekannter Remission oder Transmission durchgeführt sondern an zwei oder mehreren mit unterschiedlichen optischen Eigenschaften. Bei dieser Vorgehensweise werden für jede Lichtquelle zwei oder mehr Wertepaare aus Sensorsignalen und Remissions- bzw. Transmissionswerten erhalten, so daß anhand der Wertepaare eine Kalibrationsgerade oder allgemein eine Kalibrationskurve zur Umrechnung von Sensorsignalen in Remissionswerte aufgestellt werden kann.

Bei einer zweiten Ausführungsform mit mindestens zwei Sensoren wird so vorgegangen, daß bei Beleuchtung eines Testelementes die Ausgangssignale der mindestens zwei Sensoren aufgenommen werden. Die Kalibration einer solchen Anordnung kann analog der beschriebenen Vorgehensweise für die erste Ausführungsform vorgenommen werden.

Bei jeder der beiden genannten Ausführungsformen werden von der Auswerteeinheit schließlich die Meßwerte miteinander verglichen und anhand ihrer Abweichung festgestellt, ob die untersuchten Bereiche der Auswertezone hinreichend gleiche Remissions- bzw. Transmissionseigenschaften aufweisen. Diese Untersuchung wird vorzugsweise durch eine Differenzbildung der ermittelten Meßwerte vorgenommen. Zur Bildung der Differenzen beinhaltet die Auswerteeinheit ein Modul zur Differenzbildung, das beispielsweise mit einem Operationsverstärker realisiert werden kann.

Als Kriterium, ob eine ausreichende Menge Probe auf das Testelement aufgegeben wurde, wird der Betrag der Differenz herangezogen. Das Testelement wird als geeignet zur quantitativen Auswertung erkannt, wenn die Betragsdifferenz unter einem vorgegebenen Grenzwert liegt. In der Praxis sind bei stärkeren Verfärbungen der Auswertezone auch höhere Abweichungen der Meßwerte tolerierbar als dies bei kleinen Analytkonzentrationen und den daraus resultierenden geringeren Verfärbungen der Fall ist. Für verschiedene Bereiche der gemessenen Remission können vorteilhaft unterschiedliche Grenzwerte der Meßwertabweichung verwendet werden. Günstig ist es auch, statt der Meßwertdifferenz eine relative Abweichung der Meßwerte voneinander zu verwenden, da bei dieser bereits die absolute Höhe der Meßwerte mit einfließt und dieser Vorgehensweise der vorangehend beschriebene Vorteil mehrerer Grenzwerte bereits inhärent ist. Die relative Abweichung der Meßwerte kann ermittelt werden, indem die Betragsdifferenz der Meßwerte zum Mittelwert der Meßwerte ins Verhältnis gesetzt wird. Werden bei der ersten nicht erfindungsgemäßen Ausführungsform mehr als zwei Lichtquellen eingesetzt, so können entsprechend auch mehrere Differenzen zwischen den einzelnen Meßwerten gebildet und ihre Abweichungen voneinander untersucht werden. Entsprechendes gilt für die Verwendung mehrerer Sensoren bei der zweiten Ausführungsform.

Neben einer Meßwertdifferenz und einer relativen Abweichung der Meßwerte voneinander kann erfindungsgemäß auch der Quotient der beiden Meßwerte gebildet werden, um zu erkennen, ob die Auswertezone ausreichend homogen für eine quantitative Auswertung ist. Bei der Verwendung des Quotienten als Erkennungskriterium wird geprüft, wie nahe der Quotient an eins liegt. Es können Grenzwerte unterhalb und oberhalb eins gewählt werden, die nicht unter- bzw. überschritten werden dürfen.

Die zulässigen Abweichungen der Meßwerte, bei denen noch eine ausreichend homogene Auswertezone des Testelementes vorliegt, um ein quantitativ richtiges Ergebnis zu liefern, können in Experimentalserien ermittelt werden. In der Regel wird es lediglich notwendig sein, den zulässigen Grenzwert einmalig für eine bestimmte Gerätebauform und einen bestimmten Testelementetyp zu ermitteln. Der Grenzwert kann in einem Speicher des Analysesystems als vorgegebener Grenzwert einmalig abgelegt werden. Es ist jedoch auch vorteilhaft möglich, in der gebräuchlichen Codierung von Teststreifen auch diesen Grenzwert mit anzugeben. Das Analysesystem kann bei dieser Vorgehensweise flexibler auf verschiedene Testelementetypen oder herstellungsbedingte Schwankungen der Testelemente reagieren.

Die Bestrahlung der Auswertezone des Testelementes und Detektion der transmittierten oder reflektierten Strahlung erfolgt bevorzugt mehrfach an dem gleichen Testelement. Bei einer solchen Vorgehensweise wird entweder Probe auf das Testelement aufgegeben und dieses darauf in ein erfindungsgemäßes Analysesystem überführt oder die Aufgabe der Probeflüssigkeit erfolgt, während sich das Testelement bereits im Analysesystem befindet. Der Start der Messung kann beispielsweise von dem Benutzer durch Betätigung einer Taste initiiert werden oder auch durch eine automatische Erkennung eines Testelementes im Analysesystem, beispielsweise durch eine Lichtschranke, einen Mikroschalter oder dergleichen. Vorzugsweise werden nach dieser Initiierung vom Analysesystem wiederholt Messungen in zeitlichen Abständen durchgeführt. So kann die Entwicklung der Farbbildung auf der Auswertezone verfolgt und die Abweichung der Meßwerte voneinander überwacht werden. Sollte die Abweichung der Signale nach einer ausreichenden Zeit nicht unter den gesetzten Grenzwert absinken, so wird das Testelement zurückgewiesen und keine quantitative Auswertung durchgeführt. Auf der anderen Seite ist es wichtig, daß nicht bereits eine Auswertung erfolgt, bevor eine Veränderung der Auswertezone stattgefunden hat, da dies eine ausreichende Probenmenge vortäuschen könnte. Daher ist es vorteilhaft, neben den Abweichungen der Meßwerte voneinander auch die Absolutwerte der einzelnen Meßwerte zu berücksichtigen. Besonders einfach gelingt dies, wenn die Sensorsignale in Meßwerte umgewandelt werden, die relativen oder auch absoluten Remissionen bzw. Transmissionen entsprechen. Solche Meßwerte können vor Durchführung der Auswertung daraufhin überprüft werden, ob ihr Wert einerseits zeitlich ausreichend konstant ist und damit die analytische Reaktion in ausreichendem Maße abgeschlossen ist und ob überhaupt eine Reaktion in ausreichendem Maße erfolgt ist.

Im Zusammenhang mit der vorliegenden Erfindung können insbesondere Testelemente vorteilhaft verwendet werden, bei denen die Aufgabezone für Probeflüssigkeit mit einem Netz überzogen ist. Das Netz führt dazu, daß die Bereiche der Aufgabezone, auf der sich die Probeflüssigkeit ausbreitet, relativ scharf begrenzt ist. Dies hängt mit einer Triggerfunktion des Netzes zusammen. Aufgrund der Oberflächenspannung der Flüssigkeit in Netzen besteht eine Tendenz, daß sich Netzmaschen entweder vollständig mit einem Flüssigkeitsfilm füllen oder aber keine Flüssigkeit aufnehmen. Dieses "Alles oder Nichts" Prinzip führt zur Ausbildung ausgeprägter Flüssigkeitskanten entlang der Netzlinien, die von einer erfindungsgemäßen Vorrichtung besonders gut ausgewertet werden können. Geeignete Netze zum Abdecken der Probeaufgabezone besitzen in der Regel quadratische oder rechteckige Maschen und bestehen vorzugsweise aus einem hydrophilen Material, das keine wesentlichen Mengen an Flüssigkeit aufnimmt. Geeignete Netzmaterialien sind beispielsweise monofile, grobmaschige Kunstfasergewebe aus Polyester, Polyamid usw., bevorzugt sind die Netze mit Detergenzien imprägniert. Gemäß der ersten nicht erfindungsgemäßen Ausführungsform hat es sich als vorteilhaft herausgestellt, wenn die Verbindungslinie zwischen den beleuchteten Bereichen auf der Auswertezone mit den Fäden des Netzes einen Winkel von 45 ° bildet. Analoges gilt für die zweite Ausführungsform, bei der die Verbindungslinie zwischen den Bereichen, von denen die Sensoren Strahlung aufnehmen, mit den Fäden des Netzes einen Winkel von 45 ° bildet.

Gemäß der ersten nicht erfindungsgemäßen Ausführungsform kann vorteilhaft auch mit Lichtquellen unterschiedlicher spektraler Intensitätsverteilung gearbeitet werden. Bei der ersten nicht erfindungsgemäßen Ausführungsform werden dabei Sätze von mindestens zwei Lichtquellen verwendet, die weitgehend in ihrer spektralen Intensitätsverteilung übereinstimmen. Innerhalb jeden Satzes kann die erfindungsgemäße Vorgehensweise angewandt werden, wobei ein Vergleich der mit den unterschiedlichen Sätzen gewonnenen Untersuchungen eine zusätzliche Absicherung ermöglicht. Weiterhin können die Lichtquellen unterschiedlicher spektraler Intensitätsverteilung auch herangezogen werden, um eine quantitative Auswertung der Testelemente bei verschiedenen Wellenlängen zu ermöglichen. Entsprechend sind bei der zweiten Ausführungsform der Erfindung zwei oder mehr Lichtquellen unterschiedlicher spektraler Intensitätsverteilung anwendbar.

Die vorliegende Erfindung wird anhand einiger Figuren näher erläutert.
- Figur 1:: Schematische Darstellung eines Systems gemäß nicht erfindungsgemäßer Ausführungsform 1
- Figur 2:: Schematische Darstellung eines Systems gemäß Ausführungsform 2
- Figur 3:: Aufsicht auf die Abdeckung für die Optik eines Analysesystems gemäß nicht erfindungsgemäßer Ausführungsform 1
- Figur 4:: Querschnitt durch Figur 3 entlang Linie A-A
- Figur 5:: Querschnitt durch Figur 3 entlang Linie B-B
- Figur 6:: Darstellung von beleuchteten Bereichen auf einem Testelement
- Figur 7:: Teststreifen mit aufgegebener Probe von oben (Aufgabezone) und unten (Auswertezone)

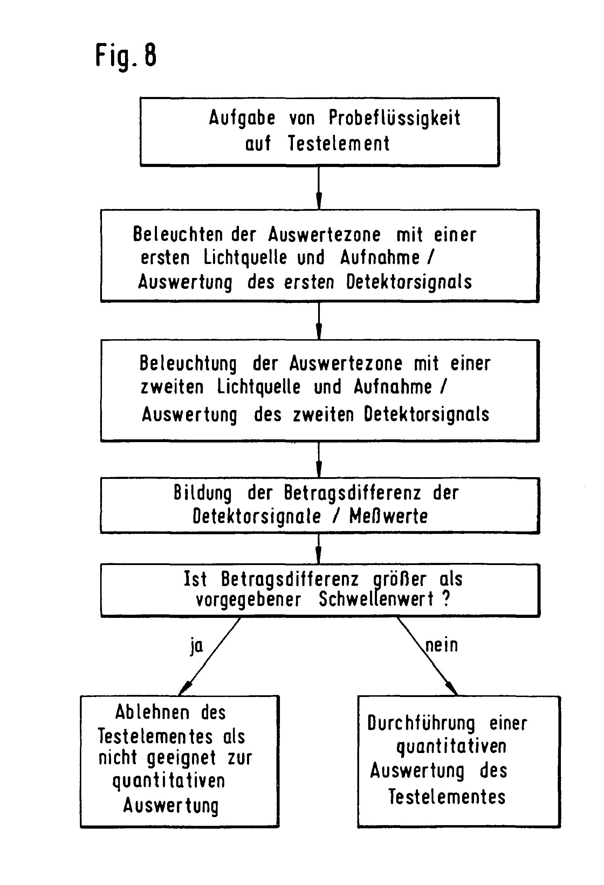

- Figur 8:: Verfahrensschritte zur Feststellung ob auf die Aufgabezone eines Testelementes eine ausreichende Menge an Probeflüssigkeit gleichmäßig aufgegeben wurde
- Figur 9:: Auswertekurve für verschiedene Blutvolumina mit einem Blutzuckermeßgerät und Testelement des Standes der Technik
- Figur 10:: Meßkurve eines Blutzuckermeßgerätes mit einer erfindungsgemäßen Auswertevorrichtung
- Figur 11:: Bilder von Testelementen mit aufgegebener Probe

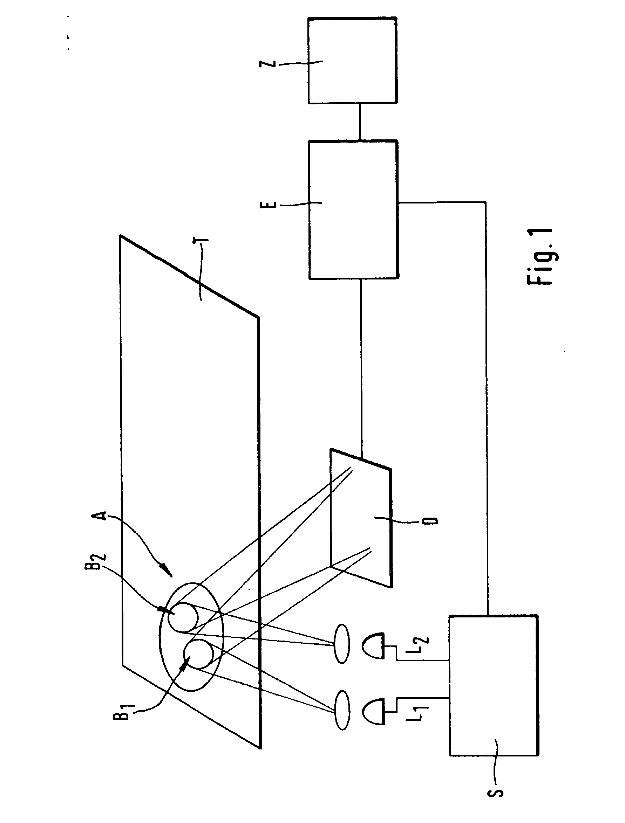

Figur 1 stellt eine schematische Darstellung eines erfindungsgemäßen Systems gemäß nicht erfindungsgemäßer Ausführungsform 1 dar. Die Figur zeigt ein Testelement (T) mit einer darauf befindlichen Auswertezone (A), die von zwei Lichtquellen (L₁, L₂) beleuchtet wird. Jede der Lichtquellen wird durch eine Linse bzw. ein Linsensystem auf einen zugehörigen Bereich (B₁, B₂) auf der Auswertezone abgebildet. Von diesen Bereichen diffus reflektierte Strahlung wird von dem Detektor (D) aufgenommen und das Ausgangssignal an die Auswerteeinheit (E) weitergeleitet. Die Auswerteeinheit ermittelt aus den Ausgangssignalen des Sensors, ob auf die Aufgabezone des Testelementes eine ausreichende Menge Probeflüssigkeit gleichmäßig aufgegeben wurde, indem die Remissionswerte der Bereiche B₁ und B₂ miteinander verglichen werden. Stimmen die Remissionswerte ausreichend gut überein, so kann eine entsprechende Anzeige auf der Anzeigevorrichtung (Z) dargestellt werden. In der Regel wird jedoch in diesem Fall direkt eine quantitative Auswertung des Testelementes vorgenommen und das Auswerteergebnis auf der Anzeigeeinheit dargestellt. Sollte jedoch die Differenz der Remissionswerte der Bereiche B₁ und B₂ den vorgegebenen Grenzwert überschreiten, so wird auf der Anzeigevorrichtung (Z) ein entsprechender Hinweis ausgegeben.

Zur Durchführung der Feststellung ob genügend Probeflüssigkeit ausreichend gleichmäßig aufgegeben wurde, wird von der Steuereinheit (S) zunächst die Lichtquelle L₁ aktiviert und gleichzeitig von der Steuereinheit an die Auswerteeinheit die Information weitergegeben, daß das ankommende Ausgangssignal des Sensors zur Lichtquelle L₁ gehört. Nachdem die Lichtquelle L₁ deaktiviert wurde, wird der entsprechende Vorgang mit der Lichtquelle L₂ wiederholt. Auf Basis der erhaltenen Ausgangssignale wird nach Umrechnung in Meßwerte wie bereits beschrieben die Feststellung getroffen. Für eine gegebenenfalls nachfolgende quantitative Auswertung des Testelementes können die Lichtquellen nacheinander aktiviert werden und entweder die Meßwerte oder daraus gewonnene Konzentrationswerte gemittelt werden. Weiterhin können die Lichtquellen L₁ und L₂ simultan aktiviert werden und das nunmehr am Detektor anliegende Ausgangssignal ausgewertet werden. Es kann jedoch für diese nachfolgende Messung auch eine weitere Lichtquelle verwendet werden, die vorzugsweise einen kleineren Bereich der Auswertezone (A) beleuchtet als die Lichtquellen L₁ und L₂. Erfindungsgemäß ist es jedoch vorteilhaft, die Auswertung mit den Lichtquellen L₁ und L₁ vorzunehmen, da keine weiteren Lichtquellen in das Analysesystem integriert werden müssen und außerdem für die Bereiche B₁ und B₂ bereits verifiziert wurde, daß sie geeignet mit Probeflüssigkeit versorgt sind. Es wird bei dieser Vorgehensweise zwar in der Regel nur ein relativ kleiner Teil der Auswertezone verwendet und Informationen aus anderen Bereichen der Auswertezone nicht berücksichtigt, dafür kann jedoch auch weitestgehend ausgeschlossen werden, daß durch andere Bereiche als B₁ und B₂ Falschinformationen in die Auswertung hineingelangen.

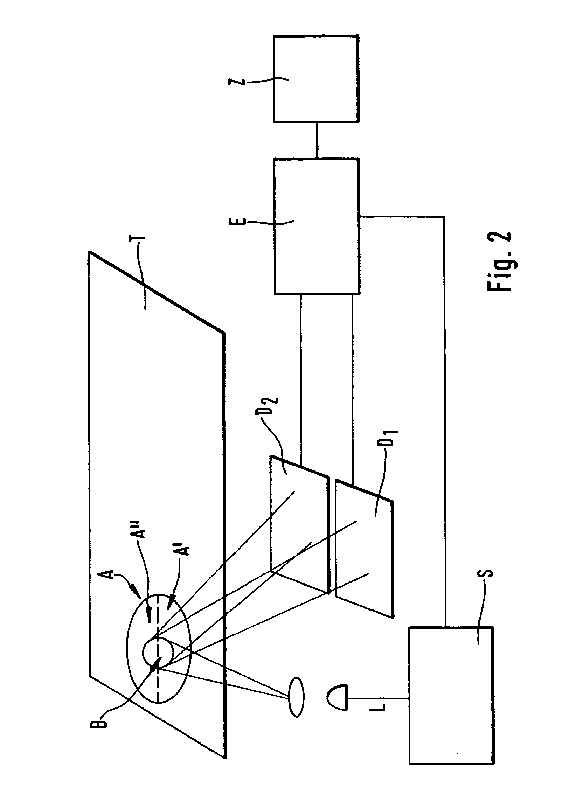

Figur 2 zeigt schematisch eine Vorrichtung gemäß der zweiten Ausführungsform. Eine Leuchtdiode (L) beleuchtet durch eine Linse bzw. ein Linsensystem einen Bereich (B) der Auswertezone (A) des Testelements (T). Von der Auswertezone reflektierte Strahlung wird durch die Detektoren D₁ und D₂ an die Auswerteeinheit (E) weitergeleitet. Aufgrund der geometrischen Anordnung empfängt der Detektor D₁ Strahlung aus dem Teil A' der Auswertezone stärker als aus dem Bereich A". Der Detektor D₂ hingegen empfängt Strahlung aus dem Bereich A" stärker als aus dem Bereich A'. Durch die Auswerteeinheit (E) werden die Ausgangssignale der Detektoren in Meßwerte umgewandelt und festgestellt, ob der Betrag der Differenz der Meßwerte kleiner als ein vorgegebener Grenzwert ist. Die Auswerteeinheit (E) ist mit der Steuereinheit (S) gekoppelt, die die Lichtquelle (L) ansteuert. Somit kann gewährleistet werden, daß von der Auswerteeinheit die Signale der Detektoren aufgenommen werden, während die Lichtquelle aktiviert ist. Ergebnisse der Auswertung können auf einer Anzeigeeinheit (Z) dargestellt werden, die ihrerseits mit der Auswerteeinheit verbunden ist.

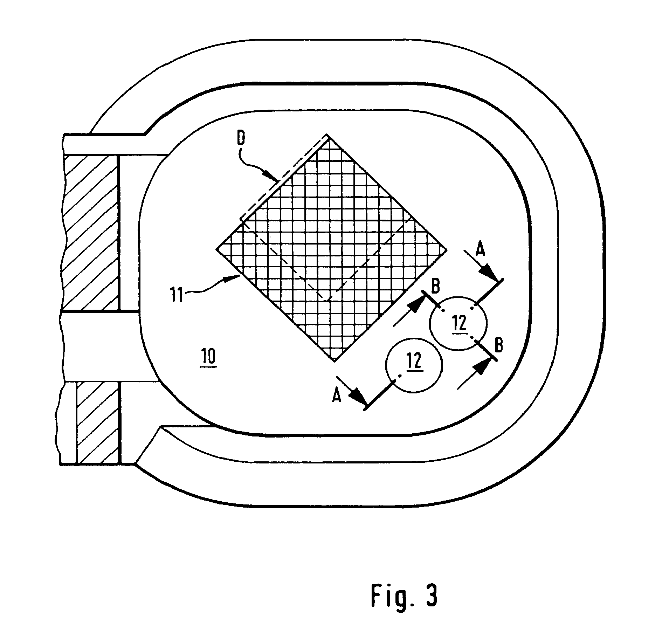

Figur 3 zeigt die Aufsicht auf eine Abdeckung (10) für den Meßbereich des Analysesystems. Die Abdeckung (10) besteht aus einem schwarzen, lichtabsorbierenden Kunststoff. In ihr befindet sich ein optisches Fenster (11) aus transparentem Kunststoff, unter dem der Detektor (D) angeordnet ist. Neben einer Kante des Detektors (D) befinden sich zwei Linsen (12), durch die Licht von den darunter liegenden Lichtquellen auf die Auswertezone des Testelements abgebildet werden. In Figur 3 ist durch eine Schraffierung auf dem optischen Fenster (11) bereits angedeutet, wie die Netzlinien eines Testelementes mit Netz auf den Detektor abgebildet wird. Es ist zu erkennen, daß die Netzlinie mit der Verbindungslinie A-A zwischen den optischen Linsen (12) (und somit zwischen den Lichtquellen) einen 45 ° Winkel bilden.

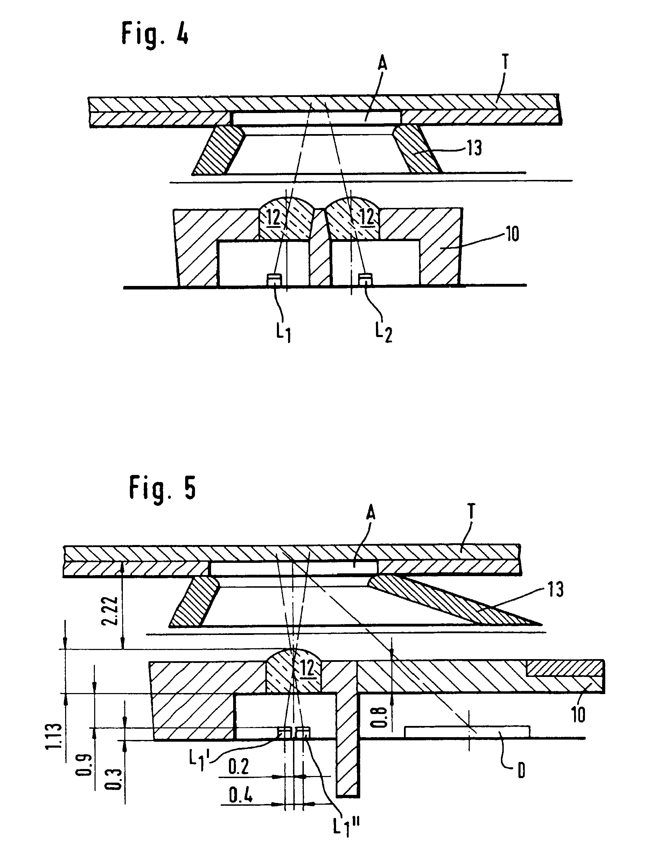

Figur 4 zeigt einen Querschnitt durch ein Analysesystem gemäß Figur 3 entlang der Schnittlinie A-A. In dieser Darstellung ist die Anordnung der Lichtquellen (L₁, L₂) relativ zu den optischen Linsen (12) sowie dem Teststreifen (T) deutlich zu erkennen. Die Lichtquellen befinden sich unterhalb der optischen Linsen (12), die sich in der Abdeckung (10) befinden. Die Linsen bestehen im dargestellten Fall aus einem transparenten Kunststoff, wie z. B. Polymethylmetacrylat. Die dargestellten Lichtquellen sind Leuchtdioden mit einer lichtaussendenden Ebene in der Größe von 0,2 x 0,2 mm. Oberhalb der Abdeckung (10) befindet sich eine Teststreifenauflage (13), die konusförmig ausgebildet ist und sich in Richtung auf die Auswertezone (A) des Testelementes (T) hin verengt.

Figur 5 zeigt einen Querschnitt durch die Figur 3 entlang der Linie B-B. In dieser Darstellungsweise ist zu erkennen, daß unterhalb jeder optischen Linse zwei Leuchtdioden nebeneinander angeordnet sind. In dieser bevorzugten Ausführungsform ist es möglich, platzsparend und ohne zusätzliche optische Elemente (Linsen) zwei Sätze von jeweils zwei Typen Leuchtdioden unterzubringen. Die erste der in Figur 5 dargestellten Leuchtdioden (L₁') hat ihren Emissionsschwerpunkt im grünen Bereich, während die zweite Leuchtdiode (L₁") ihren Emissionsschwerpunkt im roten Bereich hat. Aus Figur 5 ist ebenfalls zu erkennen, daß die Teststreifenauflage (13) eine geometrische Form besitzt, die von der Auswertezone (A) reflektierte Strahlung möglichst vollständig auf den Detektor (D) fallen läßt. Die in Figur 5 eingezeichneten Größenangaben in mm liefern ferner eine Vorstellung, wie stark ein Analysesystem gemäß der vorliegenden Erfindung miniaturisiert werden kann.

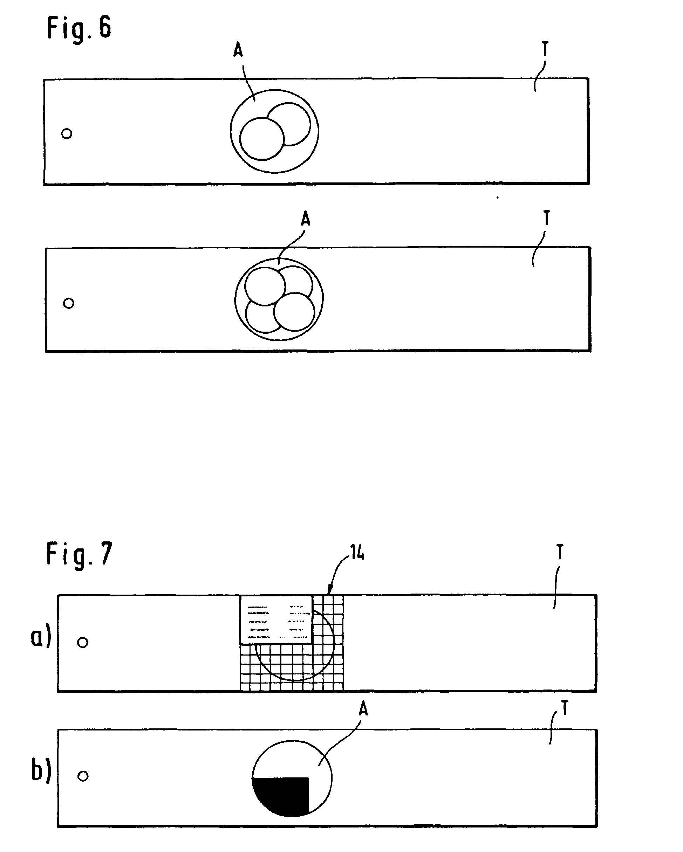

Figur 6 zeigt zwei Testelemente von der Oberseite mit ihren Auswertezonen (A). Die auf den Auswertezonen eingezeichneten Kreise bezeichnen die Bereiche, die mittels der Leuchtdioden und der Linsensysteme beleuchtet werden. Bei dem oberen Testelement sind zwei kreisförmige Bereiche beleuchtet, die vollständig innerhalb der Auswertezone liegen und sich geringfügig überlappen. Erfindungsgemäß ist es vorteilhaft, wenn die Überlappung der beleuchteten Bereiche kleiner als 50 % der Fläche eines einzelnen Leuchtfleckes ist. Weiterhin ist zu erkennen, daß die gesamte beleuchtete Fläche größer ist als der unbeleuchtete Bereich, was sich ebenfalls als vorteilhaft im praktischen Einsatz erwiesen hat. Aus einer Zusammenschau von Figur 3 und Figur 6 ergibt sich, wie ein Testelement während der Messung relativ zu den Lichtquellen angeordnet ist.

Im unteren Bereich von Figur 6 ist ein Testelement dargestellt, bei dem die Auswertezone mit vier verschiedenen Lichtquellen etwa gleicher Wellenlänge beleuchtet wird. Dieses Ausleuchtungsmuster kann mit vier in etwa quadratisch angeordneten Lichtquellen erzeugt werden. Wie bereits erwähnt, bietet die Verwendung einer größeren Zahl von Lichtquellen eine erhöhte Sicherheit zur Erkennung von Unterdosierungen oder fehlerhaften Testelementen, insbesondere wenn die Probenaufgabezone nicht von einem Netz bedeckt ist.

Figur 7a zeigt ein Testelement, das vorteilhaft in einem erfindungsgemäßen Analysesystem verwendet werden kann, von der Oberseite. Die Probenaufgabezone ist mit einem Netz (14) bedeckt, das quadratische Maschen besitzt. Im linken oberen Bereich der Probenaufgabezone ist ein grauer Bereich dargestellt, der exemplarisch zeigt, wie sich eine aufgegebene Probeflüssigkeit ausgebreitet hat.

Figur 7b zeigt dasselbe Testelement von der Unterseite. In dem Trägermaterial des Testelementes ist eine kreisförmige Öffnung vorgesehen, durch die die Auswertezone (A) optisch zugänglich ist. Die aufgegebene Probeflüssigkeit führt auf der Auswertezone zu einer Verfärbung, die durch ein schwarzes Kreissegment dargestellt ist.

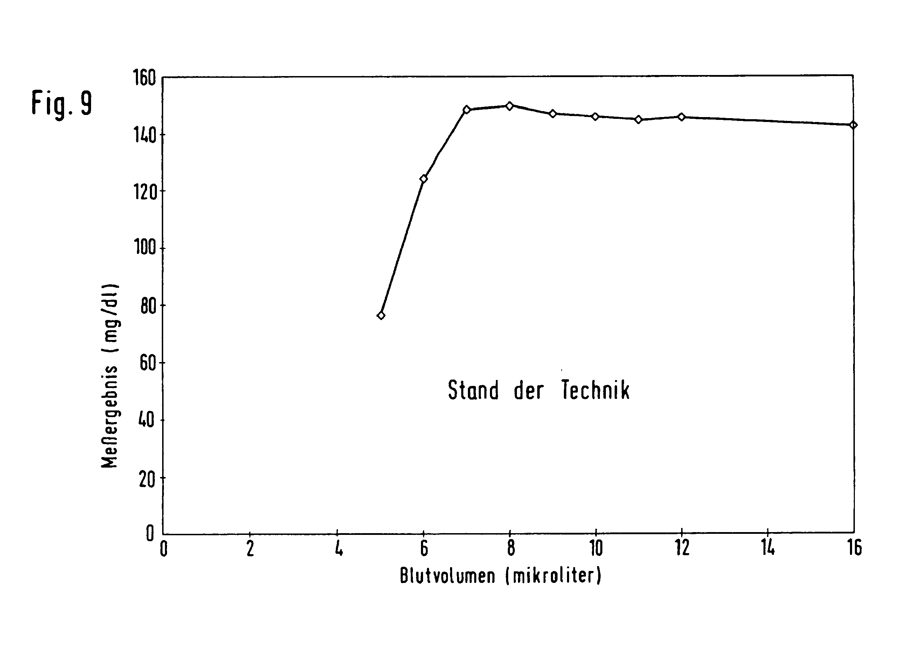

Figur 9 zeigt eine Kurve zur Blutzuckerbestimmung, die mit einem herkömmlichen Analysesystem unter Verwendung geeigneter Testelemente erhalten wurde. Als

Probeflüssigkeit diente eine Blutprobe mit 150 mg/dl Glukose. Auf der X-Achse der Figur 9 ist die Menge an Probevolumen (in µl) aufgetragen, die auf das Testelement aufgegeben wurde. Die Y-Achse zeigt das Analysenresultat in mg/dl Glukose. Aus dem Kurvenverlauf ist zu erkennen, daß für Probevolumina unterhalb 8 µl falsche Meßergebnisse erhalten werden.

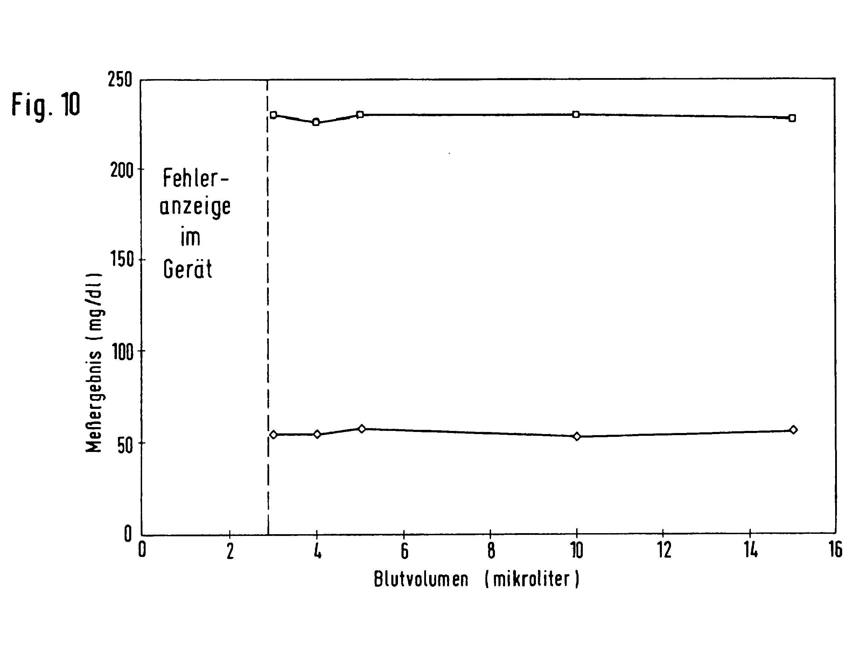

Figur 10 zeigt eine Serie vergleichbarer Experimente unter Verwendung des erfindungsgemäßen Analyesystems. Die obere der Kurven wurde mit einer Blutprobe von 230 mg/dl Glukosegehalt gewonnen und die untere Kurve mit einer Probe von 50 mg/dl Glukose. Die genaueren Resultate der Analyse unterhalb 8 µl sind bedingt durch ein verbessertes Testelement. Figur 10 zeigt jedoch, daß das Gerät unterhalb 3 µl keine Meßwerte mehr liefert, sondern eine Fehlermeldung ausgibt. Somit kann sichergestellt werden, daß durch die Aufgabe zu geringer Probevolumina auf das Testelement keine falschen Meßwerte angezeigt werden.

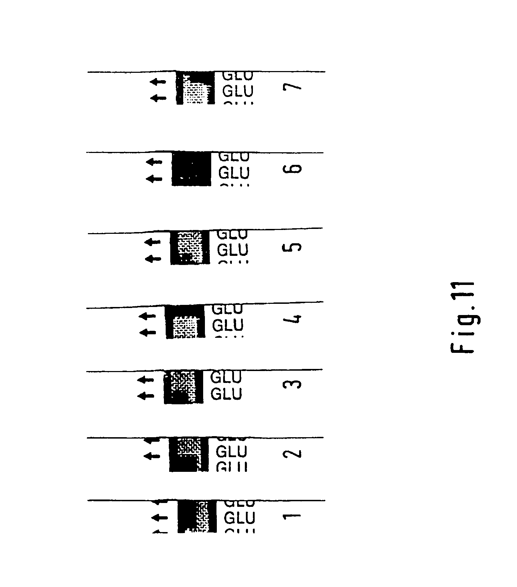

Figur 11 zeigt Bilder realer Testelemente, die in einem erfindungsgemäßen Analysesystem ausgewertet wurden. Dabei wurden die folgenden Resultate erhalten:

**Tabelle 1**

| Testelement Nr. | 1 | 2 | 3 | 4 | 5 | 6 | 7 |
|---|---|---|---|---|---|---|---|
| Relative Remission 1 | 80 % | 85,8 % | 98,1 % | 94,4 % | 99,2 % | 31,5 % | 94,7 % |
| Relative Remission 2 | 42,3 % | 46,7 % | 84,0 % | 98,7 % | 95,4 % | 31,6 % | 98,2 % |
| Differenz der Remission | 37,7 % | 39,1 % | 14,1 % | - 4,3 % | 3,8 % | 0,1 % | - 3,5 % |

Die in der obigen Tabelle aufgeführten Remissionen sind relative Remissionen bezogen auf ein trockenes Testelement, dessen Remission zu 100 % gesetzt wurde. Aus der Tabelle geht hervor, daß die inhomogen mit Probe benetzten Testelemente 1 bis 3 sehr sicher erkannt werden. Bei den ebenfalls inhomogen benetzten Testelementen 5 und 7 sind die Differenzen der gemessenen Remissionen verhältnismäßig gering, was daran liegt, daß die Benetzung entlang einer Diagonale auf der Auswertezone von oben links nach unten rechts fast symmetrisch ist. Da die Messungen für Tabelle 1 mit einem Analysesystem gemäß den Figuren 1 und 3 durchgeführt wurde, waren die beleuchteten Bereiche ihrerseits auch entlang der genannten Diagonalen von oben links nach unten rechts angeordnet und konnten daher die Unterdosierung relativ schwer erkennen. Die Testelemente 5 und 7 wurden willentlich in dieser symmetrischen Art und Weise benetzt, um die Grenzen des Verfahrens auszuloten. Derartig symmetrische Benetzungen treten bei einer praktischen Anwendung äußerst selten auf.

Das Testelement (6) in Figur 11 weist nur eine sehr kleine Differenz der gemessenen Remissionswerte auf, da es ideal homogen benetzt ist. Aus der annähernden Gleichheit der relativen Remissionen in der ersten Nachkommastelle ist zu erkennen, mit welcher Genauigkeit die Remissionen ermittelt und verglichen werden können. Bei geeigneter Wahl des Grenzwertes für die Differenz der Remissionen, vorzugsweise unterhalb von 2 % Remission, können daher inhomogen benetzte Testelemente sicher erkannt werden.

### Bezugszeichenliste

- A:: Auswertezone
- T:: Testelement
- B₁, B₂:: beleuchtete Bereiche
- L, L₁, L₂:: Lichtquellen
- S:: Steuereinheit
- D, D₁, D₂:: Detektoren
- E:: Auswerteeinheit
- Z:: Anzeigeeinheit
- (10): Abdeckung
- (11): optisches Fenster
- (12): optische Linse
- (13): Teststreifenauflage
- (14): Netz

## Patentansprüche

1. Analysesystem zur Auswertung von Testelementen mit Mitteln zur Feststellung, ob auf die Aufgabezone eines Testelementes eine ausreichende Menge Probeflüssigkeit gleichmäßig aufgegeben wurde, beinhaltend
a) mindestens zwei Sensoren, die von jeweils einem Bereich der Aufgabezone oder Auswertezone reflektiertes oder transmittiertes Licht detektieren und Ausgangssignale entsprechend der Lichtintensität liefern, wobei die Bereiche voneinander getrennt sind oder zumindest nicht vollständig überlappen,
b) mindestens eine Lichtquelle, die die Probenaufgabezone oder Auswertezone beleuchtet,
c) eine Auswerteeinheit,
die ein Ausgangssignal des ersten Sensors aufnimmt und in einen ersten Meßwert umwandelt,
die ein Ausgangssignal des zweiten Sensors aufnimmt und in einen zweiten Meßwert umwandelt,
die den ersten und den zweiten Meßwert vergleicht und feststellt, ob die Abweichung der Meßwerte voneinander ausreichend gering ist.

2. Analysesystem gemäß Anspruch 1, bei dem die Abweichung der Meßwerte voneinander durch Bildung des Betrages der Differenz der Meßwerte ermittelt wird und diese Betragsdifferenz mit mindestems einem vorgegebenen Grenzwert verglichen wird.

3. Analysesystem gemäß Anspruch 1, bei dem die Abweichung der Meßwerte voneinander als relative Abweichung bestimmt wird und mit mindestens einem vorgegebenen Grenzwert verglichen wird.

4. Analysesystem gemäß einem der vorangehenden Ansprüche, bei dem die Aufgabezone des Testelements mit einem Netz überzogen ist.

5. Analysesystem gemäß Anspruch 4, bei dem das Netz quadratische oder rechteckige Maschen hat.

6. Analysesystem gemäß Anspruch 4 oder 5, bei dem die Verbindungslinie zwischen den Bereichen, von denen die Sensoren Strahlung aufnehmen, mit den Fäden des Netzes einen Winkel von 45° bildet.
